# NEUE EUROPÄISCHE PATENTSCHRIFT

(11) **EP 0 833 747 B3**
(45) Veröffentlichungstag dieser Patentschrift: **21.03.2012**
(45) Hinweis auf die Patenterteilung: 21.03.2001
(21) Anmeldenummer: 96920837.0
(22) Anmeldetag: 21.06.1996
(51) Int. Cl.: B32B 7/12, G09F 3/02

(54) **FOLIENARTIGER SCHICHTWERKSTOFF MIT SPERRSCHICHT FÜR WEICHMACHER**
FOIL-SHAPED LAMINATED MATERIAL WITH BARRIER LAYER FOR THE PLASTICISER
MATERIAU STRATIFIE PELLICULAIRE AVEC COUCHE BARRIERE POUR LE PLASTIFIANT

(30) Priorität: 21.06.1995 DE 19522011
(43) Veröffentlichungstag der Anmeldung: 08.04.1998
(73) Patentinhaber: VISI/ONE GmbH, 42855 Remscheid (DE)
(72) Erfinder: TELTENKÖTTER-KALHEBER, Stefanie, D-42857 Remscheid (DE); KALHEBER, Michael, D-42857 Remscheid (DE)
(74) Vertreter: Müller, Enno
(86) Internationale Anmeldenummer: PCT/EP1996/002694
(87) Internationale Veröffentlichungsnummer: WO 1997/000772

(56) Entgegenhaltungen:
- EP-A- 0 286 222
- DE-A- 4 320 377
- GB-A- 2 094 496
- GB-A- 2 154 012
- DATABASE WPI Week 8608 Derwent Publications Ltd., London, GB; AN 86-050903 XP002017769 & JP,A,61 002 783 (MITSUBISHI PAPER MILL)
- DATABASE WPI Week 9016 Derwent Publications Ltd., London, GB; AN 90-120258 XP002017770 & JP,A,02 070 478 (OJI PAPER KK)
- DATABASE WPI Week 8805 Derwent Publications Ltd., London, GB; AN 88-031993 XP002017771 & JP,A,62 290 577 (NIPPON SYNTH. CHEM. KK)
- DATABASE WPI Week 8709 Derwent Publications Ltd., London, GB; AN 87-061130 XP002017772 & JP,A,62 016 185 (TOMOEGAWA PAPER MFG. KK)
- DATABASE WPI Week 9012 Derwent Publications Ltd., London, GB; AN 90-08522 XP002017773 & JP,A,02 029 393 (KOHJIN KK)

## Beschreibung

Die Erfindung bezieht sich auf einen folienartigen Schichtwerkstoff mit den Merkmalen des Oberbegriffs des Anspruchs 1.

Ein derartiger Schichtwerkstoff ist aus der DE 43 20 377 A1 bekannt. Bei diesem Schichtwerkstoff handelt es sich um eine Karte, die als Flachteil durch Andrücken auf einer Unterlage haftet. Die Karte besteht aus Kunststoff und ist mit ihrer Adhäsionsfolie zum Haften auf der Unterlage abgestimmt. Die Unterlage ist eine glatte Fläche, auf der die Adhäsionsfolie ohne teure Haftmittel haftet, sondern lediglich durch Adhäsionskräfte, die sich zwischen der Adhäsionsfolie und der Unterlage beim Aufbringen der Karte auf diese Unterlage entwickeln. Es hat sich nun herausgestellt, daß die Gebrauchsdauer derartiger Schichtwerkstoffe begrenzt ist. Das Anhaften der Karten an der Unterlage läßt im Laufe des mehrmaligen bzw. längeren Gebrauchs der Karte nach.

Aus der GB 2 094 496 A ist ein Schichtwerkstoff bekannt, dessen Träger auf einer Seite eine Farbschicht aufweist, die ihrerseits mit einer Schutzschicht überzogen ist. Auf seiner anderen Seite ist der Träger mit einer Trennschicht versehen, auf die eine Klebeschicht aufgebracht ist, welche ihrerseits mit einem Abdeckblatt versehen ist. Es ist ein Test dieses Schichtwerkstoffs vorgesehen, der in eine Hülle aus Plastikfilm eingebracht wird, um eine etwaige Einwirkung eines Weichmachers auf die Farbschicht zu ermitteln. Die Grenzschicht des Schichtwerkstoffs verhindert eine Migration des Weichmachers durch die Klebeschicht hindurch in den Träger und damit in die Farbschicht.

Demgegenüber liegt der Erfindung die Aufgabe zugrunde, einen folienartigen Schichtwerkstoff mit den eingangs genannten Merkmalen dahingehend zu verbessern, daß er dauerhaft einsatzfähig bleibt, also ohne Nachlassen der Haftkräfte auf der für ihn bestimmten glatten Unterlage auch nach längerem Gebrauch.

Diese Aufgabe wird durch die Merkmale des Kennzeichens des Anspruchs 1 gelöst.

Diese Aufgabe wird dadurch gelöst, daß die Trägerschicht zumindest weichmacherhemmend ausgebildet ist.

Die Weichmacherhemmung verringert die Gefahr, daß die Adhäsionsfolie ihre Haftfähigkeit verringert bzw. verliert. Die Weichmacherhemmung mittels der Trägerschicht ist bei nachlassender oder nicht vorhandener Hemmung der Wanderung des Weichmachers durch den Kleber hindurch unverzichtbar. Als Weichmacher werden alle Zusätze zu der Adhäsionsfolie angesehen, die dieser, ungeachtet ihrer chemischen Zusammensetzung, eine weichgummiähnliche Konsistenz geben. Die mit der Adhäsionsfolie verbundene Trägerschicht ist derart ausgebildet, daß sie selbst praktisch keine Weichmacher aus der Folie aufnimmt und so gleichzeitig auch die Migration von Weichmacheranteilen in andere, von der Adhäsionsfolie aus hinter der Trägerschicht angeordnete Werkstoffschichten blockiert. Infolgedessen ist es möglich, den Aufbau des Schichtwerkstoffs im übrigen variabel auszubilden, nämlich den jeweiligen Anforderungen des Produktionsprozesses oder des Endproduktes entsprechend angepaßt, ohne dabei weitere Rücksichten auf eventuelle Weichmachermigrationen nehmen zu müssen.

Der Schichtwerkstoff kann so weitergebildet werden, daß die Trägerschicht auf ihrer der Adhäsionsfolie gegenüberliegenden Oberfläche mit einer Deckschicht kaschiert ist. Diese Deckschicht kann dem Verwendungszweck des Schichtwerkstoffs individuell angepaßt sein. Die Deckschicht kann beispielsweise eine Schutzschicht sein, die einen auf der Trägerschicht vorhandenen Druck schützt. Sie kann Eigenschaften haben, die der Trägerschicht mangeln.

Bei der Auswahl eines Werkstoffs zur Hemmung der Migration von Weichmacher ist von Bedeutung, daß es sich hierbei um einen harten Werkstoff mit hoher Dichte handeln muß. In diesem Sinne hat es sich als vorteilhaft erwiesen, den Schichtwerkstoff so auszubilden, daß die Trägerschicht und/ oder die Deckschicht aus einer Polyesterfolie besteht bzw. bestehen. Der Werkstoff Polyesterfolie steht als Trägerschicht und auch als Deckschicht in verschiedenen Stärken zur verrugung und kann den übrigen Schichtwerkstoffen, den Produktionsbedingungen und den Anforderungen an das Endprodukt so angepaßt werden, daß sie die Adhäsionsfolie und/oder die übrigen Schichtwerkstoffe ergänzt und deren Schwächen kompensiert. Vorteilhaft ist auch die Bedruckbarkeit der Polyesterfolie. Wenn diese Folie transparent ist, kann sie für Hinterdruck verwendet werden, also für rückseitige Bedruckung, wobei die Adhäsionsfolie des Schichtwerkstoffs auf einer durchsichtigen Glasfläche oder dergleichen durch einfaches Andrücken befestigt werden kann. Der Druck ist durch das Glas, die Adhäsionsfolie und die durchsichtige Trägerschicht bzw. die Deckschicht hindurch zu erkennen.

Der Schichtwerkstoff kann so ausgebildet werden, daß die Polyesterfolie außenseitig bezüglich ihrer Abwischbarkeit oder ihrer Bedruckbarkeit optimiert ist. Eine verbesserte Abwischbarkeit der Polyesterfolie wird erreicht, wenn diese auf ihrer Außenseite möglichst glatt und antistatisch ausgerüstet ist. Für ihre außenseitige Bedruckbarkeit ist hingegen eine vorbestimmte Rauhigkeit von Vorteil, infolge derer die Druckfarbe besser haftet. Um die vorgenannten Eigenschaften der Polyesterfolie zu erreichen, sind unterschiedliche Behandlungsverfahren denkbar, sofern von den herstellungsbedingten Eigenschaften abgewichen werden soll. Beispielsweise sind chemische Vorbehandlungen möglich. Es ist eine elektrostatische Aufladungsbehandlung möglich oder es erfolgt sogar eine Spezialbeschichtung.

Von weiterer Bedeutung ist es, den Schichtwerkstoff so auszubilden, daß die Trägerschicht und/ oder die Deckschicht selbstrückstellend ausgebildet ist bzw. sind. Dadurch wird beispielsweise erreicht, daß der Schichtwerkstoff stets flach liegt, auch wenn er nach seiner Herstellung aufgerollt wurde, um ihn transportieren zu können. Die aus ihm hergestellten Elemente, beispielsweise Karten, sind eben und auch bei nicht zweckmäßiger Lagerung solcher Karten, z.B. auf einer unebenen Unterlage, ist die Trägerschicht infolge ihrer selbstrückstellenden Eigenschaften in der Lage, den Schichtwerkstoff auf der Unterlage flach liegen zu lassen. Diese Selbstrtickstellung, die insbesondere bei Polyesterfolie vergleichsweise ausgeprägt ist, gibt dem Schichtwerkstoff die erforderliche Formstabilität, die entscheidend für eine optimale Haftung der Adhäsionsfolie des Schichtwerkstoffs auf dem Untergrund ist. Die Selbstrückstellung wird durch die Dicke des Schichtwerkstoffs mitbestimmt. Dabei ist zu berücksichtigen, daß die Adhäsionsfolie extrem verformbar bzw. knautschbar ist.

Die Selbstrtickstellungskräfte müssen also bei einem zweilagigem Werkstoff im wesentlichen durch die Trägerschicht aufgebracht werden. Deswegen kann der Schichtwerkstoff zweckmäßigerweise so ausgebildet werden, daß die Trägerschicht bei zweilagiger Ausbildung des Schichtwerkstoffs etwa 100 bis 200 Am und/oder die Adhäsionsfolie etwa 250 µm stark ist. Bei einer derartigen Bemessung der Trägerschicht ist der Schichtwerkstoff weder zu lappig noch zu steif für eine Weiterverarbeitung, insbesondere für eine Weiterverarbeitung als Bogenware. Wenn die Adhäsionsfolie etwa 250 µm stark ist, kann sie auch die bei üblichen Verarbeitungsverfahren auftretenden Dehnungen verkraften, ohne daß sie dadurch zu dünn wird, so daß sie die erforderlichen Adhäsionskräfte nicht mehr aufbringen könnte. Bei der angegebenen Bemessung der Adhäsionsfolie ist die Selbstrtickstellung des zweilagigen Schichtwerkstoffs gewährleistet, insbesondere bei der vorgenannten Bemessung der Trägerschichten, wenn diese aus Polyesterfolie bestehen.

Die Polyesterfolie läßt sich bedrucken, beispielsweise als Bogenware im Sieb- oder Offsetdruck. Ein Bedrucken im Rollendruck ist technisch ebenfalls möglich, es entstehen jedoch hohe Folienverluste beim Einrichten und Anlaufen der Rollendruckmaschine. Speziell im Hinblick hierauf wird angestrebt, zweilagigen Schichtwerkstoff einzusetzen, da dann die Folienverluste am wenigsten kosten.

Der Schichtwerkstoff kann aber auch so ausgebildet werden, daß die Trägerschicht bei drei- oder mehrlagiger Ausbildung des Schichtwerkstoffs etwa 50 µm stark und die Deckschicht etwa 100 bis 200 µm stark ist. Die nur 50 µm dünne Trägerschicht kann als Druckbildträger dienen. Sie ist sehr aennungsstabil und kann auch in großen Maschinen mit entsprechend starkem Zug bei der Verarbeitung ein verzerrungsfreies Druckbild ermöglichen. Ein derart präzises Druckbild macht ein präzises Stanzergebnis möglich. Exakte Druck- und Stanzergebnisse sind jedoch gerade im Bereich der Werbung und Präsentation von großer Bedeutung. Bei einem dreischichtigen oder mehrschichtigen Werkstoff müssen die Selbstrückstellungskräfte im wesentlichen durch die Trägerschicht und durch die Deckschicht gemeinsam oder einzeln aufgebracht werden.

Insbesondere im Rollendruck bedruckte Trägerschichten werden in der Regel anschließend an den Rollendruck mit einer Deckschicht versehen. Sie dient dem Schutz des Drucks, insbesondere bei großer Dicke und übernimmt die Rückstellung des Schichtwerkstoffs. Die Deckschicht kann abwischbar und beschriftbar sein, wobei die Deckschicht dazu beiträgt, daß eine chemische Beeinträchtigung der Trägerschicht aus etwaigen Beschriftungen vermieden werden kann, z.B. eine chemische Beeinträchtigung durch Lösungsmittel. Die Deckschicht verhindert auch eine leicht erfolgende mechanische Verletzung der Trägerschicht, z. B. durch Zerkratzen. Bei dünner Trägerschicht wird die Deckschicht zur Erreichung der erforderlichen Selbstrückstellung jedoch häufig eine Polyesterfolie sein, deren selbstrückstellende und weichmacherhemmenden Eigenschaften genutzt werden.

Der Schichtwerkstoff kann aber auch so ausgebildet werden, daß die Deckschicht eine Polyethylenfolie oder eine Polypropylenfolie ist. Auch diese Folien stehen in den für den praktischen Einsatz im Werbe-, Moderations- und Präsentationsbereich wichtigen Stärken zur Verfügung. Die Polypropylenfolie hat den Vorteil, daß sie sich auch ohne weitere Schutzschicht kratzfest z.B. im Offsetdruck bedrucken läßt und daß sie auch für den Direktkontakt mit Lebensmitteln geeignet ist. Die Polypropylenfolie oder OPP-Folie wird in herkömmlicher Weise für Cellophanierungen verwendet.

Eine zweckmäßige Ausgestaltung des Schichtwerkstoffs ist dadurch gegeben, daß die Trägerschicht klarsichtig oder eingefärbt und die Deckschicht klarsichtig ist. Die Einfärbung der Trägerschicht ermöglicht die optische Absperrung des Hintergrundes bzw. der Unterlage, auf die der Schichtwerkstoff z.B. als Karte aufgebracht wird. Zugleich wird dadurch die Erkennbarkeit eines Drucks verbessert, der entweder auf der Trägerschicht oder auf der Deckschicht erfolgt. Die Klarsichtigkeit der Deckschicht erlaubt es, die Einfärbung der Trägerschicht und einen eventuellen Druck zu erkennen. Die Einfärbung der Trägerschicht hat auch den Vorteil, daß ein folienartiger Schichtwerkstoff ausgebildet werden kann, der den Untergrund optisch absperrt und ohne Deckschicht ist. Eine aus Polyesterfolie bestehende Trägerschicht kann auch weiß durchgefärbt zur Absperrung des Untergrundes eingesetzt werden. Die Polyesterfolie erreicht durch ihre hohe Dichte selbst bei den oben genannten geringen Stärken einen hohen Opazitätsgrad und unterstützt so die Absperrung des Untergrundes, die allein durch die Bedruckung normalerweise nicht in ausreichendem Maße erreicht werden kann. Die vorbeschriebene Ausgestaltung kann entfallen, falls die Adhäsionsfolie selbst bereits weiß eingefärbt ist. Beim Einsatz von Polyesterfolie kann diese als Trägerschicht und als Deckschicht bedruckt werden. Insbesondere bei Einsatz des Offsetdruckverfahrens wird im Anschluß an die Bedruckung üblicherweise eine weitere Schicht notwendig sein, beispielsweise die vorbeschriebene Deckschicht, um das Druckbild zu schützen, falls es für die jeweilige Anwendung nicht genügend kratzfest oder gegen sonstige Einwirkungen resistent ist. Die vorbeschriebene Deckschicht zum Schutze einer im Offsetdruckverfahren hergestellten Bedrukkung kann aber beispielsweise auch aus einer einfachen Lackierung oder aus einer Cellophanierung der Trägerschicht bestehen.

Es ist möglich, den Schichtwerkstoff so aufzubauen, daß seine Trägerschicht und die Adhäsionsfolie aufgrund der Adhäsionswirkung letzterer zusammenhalten. Es empfiehlt sich jedoch, den Schichtwerkstoff so auszubilden, daß ein die Adhäsionsfolie mit der Trägerschicht verbindender Kleber zumindest weichmacherhemmend ausgebildet ist. Ein Kleber zum Verbinden der Adhäsionsfolie mit der Trägerschicht ist erforderlich, damit sich eine dauerhafte Verbindung beider Bestandteile erreichen läßt. Ein Zusammenhaften der Trägerschicht und der Adhäsionsfolie allein aufgrund der Verbindungswirkung der Adhäsionsfolie ist nicht hinreichend sicher. Rückstellkräfte in den Werkstoffen und/oder Temperatureinflüsse könnten dazu führen, daß sich die beiden zu verbindenden Teile zumindest teilweise voneinander lösen. Die Ausbildung des Klebers zwischen Adhäsionsfolie und Trägerschicht im Sinne eines Hemmens der Wanderung des Weichmachers aus der Folie in die Trägerschicht kann bewirken, daß der Schichtwerkstoff eine hinreichende Gebrauchsdauer hat. Der Weichmacher bleibt in der Adhäsionsfolie eingesperrt, wenn der Kleber weichmachersperrend ausgebildet ist.

Um den Schichtwerkstoff weiterzubilden, ist es vorteilhaft, trockene Kleber einzusetzen, die selbst bei geringen Schichtdicken hinreichende Klebkräfte aufbringen und dabei Bestandteile der zu verbindenden Teile abweisen bzw. nicht aufnehmen können. In diesem Sinne wird der Schichtwerkstoff so ausgebildet, daß der Kleber ein Polyurethankleber ist.

Vorteilhafterweise wird der Schichtwerkstoff so ausgebildet, daß der Kleber für die Deckschicht der gleiche Kleber ist, wie der zwischen der Adhäsionsfolie und der Trägerschicht. Dadurch ergibt sich vor allem für die Herstellung des Schichtwerkstoffs der Vorteil, daß ein Maschinenwechsel zum Auftrag unterschiedlichen Klebers vermieden wird.

Für den Einsatz von Schichtwerkstoffen ist es von Bedeutung, daß diese recycelbar sind. Im Hinblick hierauf kann der Schichtstoff durch entsprechende Klebstoffkonzentration so ausgebildet werden, daß seine Schichten trennbar miteinander verklebt sind. Nicht mehr zu benutzende Karten können dann sortenrein zerlegt werden, falls ihre Schichten aus unterschiedlichen Werkstoffen bestehen.

Der Schichtwerkstoff kann auch so ausgebildet werden, daß die Deckschicht oder die Trägerschicht mit einer Schutzschicht versehen ist. Es ergibt sich dann ein drei- oder vierlagiger Schichtwerkstoff. Dieser ist insbesondere dann zweckmäßig, wenn ein Grundschichtwerkstoff aus Adhäsionsfolie, Trägerschicht evtl. zzgl Deckschicht-, und Abdeckschicht bei Rollenproduktion in entsprechenden Mengen kostengünstig produziert wird, um anschließend für kleinere Spezialprodukte in Form von Bogen bedruckt und weiterverarbeitet werden zu können. Die Schutzschicht schützt dann den Druck auf der Trägerschicht oder der Deckschicht. Die Schutzschicht ist beispielsweise eine einfache Cellophanierung aus Polypropylen oder eine Lakkierung.

Eine Weiterbildung des Schichtwerkstoffs kann dadurch erreicht werden, daß die Schutzschicht auf der Trägerschicht oder auf der Deckschicht mittels Klebstoff haftet und von diesem auf der Schicht deponierten Klebstoff abziehbar ist. In diesem Fall deckt die Schutzschicht den Klebstoff solange ab, bis sie abgezogen ist. Es ist nach dem Abziehen der Schutzschicht möglich, beliebige Flecken oder Teile zu befestigen, soweit sie durch den Klebstoff festgehalten werden. Die Flecken sind beispielsweise Papierflecken, wie nicht selbstklebende Etiketten oder Papierbildchen. Die Flekken können auch aus Folien bestehen, die bedruckt sind, oder es werden reliefartige oder dreidimensionale Teile aufgeklebt, die jeweils nicht mit Klebstoff versehen sind. Ein wesentlicher Vorteil dieser Ausgestaltung des Schichtwerkstoffs ist, daß selbstangefertigte Flecken oder Teile aus Papier, Folien oder dergleichen auf dem Schichtwerkstoff befestigt und anschließend mit der gegenüberliegenden Adhäsionsfolienseite durch einfaches Andrücken auf glatten Untergründen befestigt werden können.

Um den Schichtwerkstoff preiswert herstellen zu können, ist es von Bedeutung, ihn auf Rolle zu fertigen und ihn dann anschließend bis zum fertigen Endprodukt weiter, beispielsweise maschinell zu verarbeiten. Rollenlängs- und Querschnitt, Drucken, Stanzen usw. können notwendig sein. Bei insbesondere maschinellen Verarbeitungsschritten ist die Adhäsionsfolie hinderlich, weil das Material durch die Haftwirkung in sich verblockt und sich z.B. beim Drucken oder Stanzen nicht einfach von der Maschine greifen und nach dem Schneiden nicht exakt aufstapeln läßt. Es ist daher vorteilhaft, den Schichtwerkstoff so auszubilden, daß die Adhäsionsfolie adhäsionsseitig mit einer adhäsiv haftenden abziehbaren, auf ihrer freien Seite nichthaftenden, weichmacherhemmenden Abdeckschicht versehen ist. Die Abdeckschicht besteht beispielsweise aus Papier, das auf der einen Seite glatt genug ist, um auf der Adhäsionsfolie zu haften, soweit das für die erforderlichen Produktionsschritte notwendig ist, und das auf der anderen Seite rauh ist, um gleiten zu können und ein Verblokken zu verhindern. Der Endverbraucher kann die Abdeckschicht lösen. Die Abdeckschicht ist weichmacherhemmend, um ein Verhärten der Adhäsionsfolie durch Weichmachermigration in das Papier zu vermeiden. Geeignete Papiere sind polyethylenextrudierte oder gußgestrichene Papiere.

Der Schichtwerkstoff kann so ausgebildet werden, daß die Abdeckschicht eine Kunststoffolie ist. Beispielsweise wird Polypropylen eingesetzt. Die Kunststoffolie hat den Vorteil, daß der Schichtwerkstoff bei der maschinellen Weiterverarbeitung flach liegt, weil die Kunststoffolie auf beispielsweise Feuchtigkeitsänderungen nicht anders reagiert, als die aus Kunststoff bestehenden anderen Schichten. Die Kunststofffolie ist auf einer Seite glänzend und auf der anderen Seite matt. Mit ihrer glänzenden Außenfläche haftet sie gut an der Adhäsionsfolie und ihre freie matte Außenfläche verhindert insbesondere ein Verblocken von als Bogenware ausgebildetem Schichtwerkstoff bei dessen Weiterverarbeitung. Es tritt auch nur eine geringe elektrostatische Aufladung auf, was ebenfalls von Bedeutung für die maschinelle Verarbeitung ist.

Die Erfindung wird anhand von in der Zeichnung dargestellten Ausführungsbeispielen näher erläutert. Es zeigt:
Fig.1 einen zweischichtigen Schichtwerkstoff, und
Fig.2 einen dreischichtigen Schichtwerkstoff.

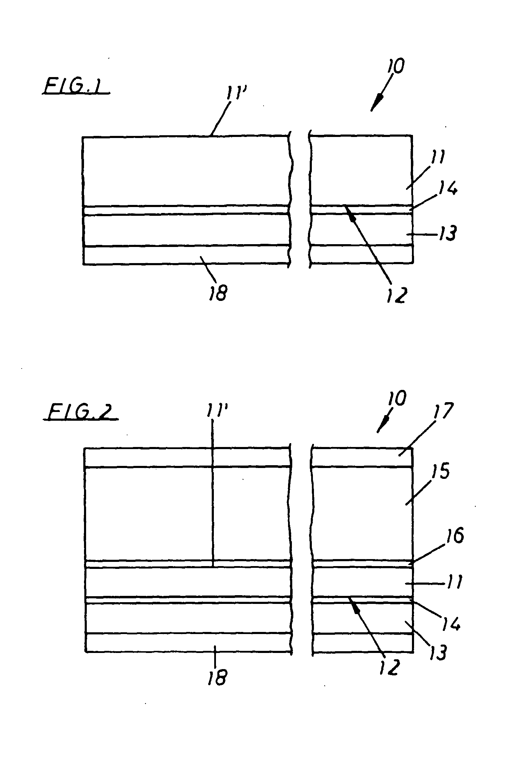

In allen Fällen ist ein Untergrund bzw. eine Unterlage nicht dargestellt, auf der die Schichtwerkstoffe 10 bzw. etwa daraus hergestellte Karten zum Einsatz kommen können. Insoweit wird auf die deutsche Patentanmeldung P 43 20 377.9 Bezug genommen, die geeignete Unterlagen für die Schichtwerkstoffe der Fig. 1 und 2 beschreibt.

Die in den Figuren dargestellten Schichtwerkstoffe 10 sind schematisch und ohne Berücksichtigung von Maßangaben dargestellt. Es kann davon ausgegangen werden, daß es sich um foliengroße bzw. bahnenartige Werkstoffe handelt, deren Querschnitt ohne Berücksichtigung von tatsächlichen Abmessungen dargestellt ist. Es könnten aber auch Querschnitte kleinerer Teile sein, wie Karten.

Der Schichtwerkstoff der Fig. 1 besteht im wesentlichen aus einer Trägerschicht 11 mit einer Oberfläche 11', die beispielsweise bedruckbar ist. Die Trägerschicht 11 ist mittels eines Klebers 14 mit einer Adhäsionsfolie 13 verbunden, und zwar vollflächig. Es wird davon ausgegangen, daß die Dicke der vom Kleber 14 gebildeten Schicht vergleichsweise gering ist. Als Adhäsionsfolie kommt beispielsweise eine Polyvinylchloridfolie zum Einsatz, die durch einen entsprechenden Weichmacheranteil so gestellt ist, daß sie weichgummiähnlich ist.

Bei einer Ausgestaltung der Trägerschicht 11 als Karte kann die Rückseite 12 dieser Schicht 11 auch nur auf einem Teilbereich mit Kleber 14 und dementsprechend mit Adhäsionsfolie 13 versehen sein.

Der Kleber 14 ist in nicht dargestellter Weise weichmacherhemmend ausgebildet, was sich beispielsweise durch den Einsatz von Polyurethanklebern erreichen läßt, die trocken und blockend sind. Ein Übertritt von Weichmacher aus der Adhäsionsfolie 13 in die Trägerschicht 11 wird dadurch gehemmt. Durch entsprechende Einstellung des Klebers kann dieser auch praktisch weichmachersperrend sein.

Die Trägerschicht 11 ist etwa 100 bis 200 µm stark. Die Trägerschicht 11 ist weichmacherhemmend ausgebildet, wozu beispielsweise eine Polyesterfolie eingesetzt wird.

Der in Fig.1 dargestellte Schichtwerkstoff kann insbesondere als bedruckte Bogenware eingesetzt werden. Es erfolgt eine Bedruckung der Oberfläche 11'. Die Oberfläche 11' kann eine lediglich in Fig.2 dargestellte Schutzschicht 17 aufweisen, welche die Bedruckung gegen Verschmutzung schützt. Außerdem wird die den Druck ausmachende Farbe durch eine solche Schutzschicht 17 abgetrennt. Der Schichtwerkstoff ist infolgedessen lebensmittelfreundlich ausgebildet und kann Lebensmittel beinhaltenen Packungen beigegeben werden, weil die Druckfarbe nicht an oder in das Lebensmittel gelangen kann. In solchen Fällen wird der Schichtwerkstoff beispielsweise für Sammelbilder verwendet. Entsprechend wird auch die Abdeckschicht 18 lebensmittelfreundlich ausgebildet sein.

Für die bedruckte Bogenware gemäß Fig.1 wird als Trägerschicht 11 transparentes oder eingefärbtes Polyester zum Einsatz kommen, welches die vorbeschriebenen vorteilhaften Eigenschaften einbringt. Die Adhäsionsfolie wird regelmäßig transparent sein, selten eingefärbt. Eine Einfärbung ist zur Abdeckung des Untergrunds vorteilhaft, wenn der Schichtwerkstoff nicht vollständig bedruckt wird. Transparente Werkstoffe sind dann notwendig, wenn der Schichtwerkstoff mit seiner Adhäsionsfolie auf eine durchsichtige Fläche geklebt werden soll und die Bedruckung durch die Schichten hindurch zu erkennen sein soll, wie es beispielsweise bei Werbeträgern oder Fan-Artikeln der Fall ist, die hinter Glas geklebt werden und auf der Oberfläche 11'spiegelbildlich bedruckt sind.

Der in Fig.2 dargestellte Schichtwerkstoff 10 ist in beschriebener Weise aus einer Trägerschicht 11 und einer Adhäsionsfolie 13 aufgebaut, die miteinander durch ein Kleber 14 verbunden sind, der zumindest weichmacherhemmend ausgebildet ist. Zusätzlich ist auf der Oberfläche 11' der Trägerschicht 11 eine Deckschicht 15 kaschiert. Die Deckschicht 15 klebt auf der Oberfläche 11' mittels eines Klebers 16, der beispielsweise die gleiche Schichtdicke hat, wie der Kleber 14. Er kann auch dieselbe chemische Zusammensetzung haben. Die Deckschicht 15 ist etwa dreifach so dick, wie die 50 µm dicke Trägerschicht 11, nämlich etwa 175 µm stark.

Die Deckschicht 15 kann in ihren Eigenschaften auf den Einsatz des Schichtwerkstoffs 10 abgestimmt werden. Beispielsweise kann die vergleichsweise große Dicke dazu benutzt werden, um die Trägerschicht 11 mechanisch zu schützen. Sie kann auch die Rückstellung des Schichtwerkstoffs 10 verbessern, beispielsweise als Polyesterfolie.

Auch die Deckschicht 15 kann geschützt werden, beispielsweise durch eine Schutzschicht 17, die beispielsweise eine Lackierung ist. Die Schutzschicht kann auch als besondere antistatische Ausrüstung der Deckschicht oder der Trägerschicht ausgebildet werden, so daß der Schichtwerkstoff sehr leicht abwischbar und seine Oberfläche immer wieder beschriftbar ist, was für Präsentation und Moderationen von entscheidender Bedeutung sein kann.

Die Fig. 1,2 zeigen außerdem jeweils noch eine Abdeckschicht 18, beispielsweise eine Papierschicht oder eine matte Kunststoffolie, mit der das unerwünschte Haften der Adhäsionsfolie auf glatten Unterlagen oder während des Produktionsprozesses verhindert werden kann.

## Patentansprüche

1. Folienartiger Schichtwerkstoff (10), insbesondere für Werbe-, Moderations- und Präsentationszwecke, mit einer aus Kunststoff bestehenden flexiblen Trägerschicht (11), die auf ihrer Rückseite (12) mit einer aus Kunststoff bestehenden, einen Weichmacher enthaltenden Adhäsionsfolie (13) versehen ist, **dadurch gekennzeichnet, dass** die Trägerschicht (11) als zumindest weichmacherhemmende Polyesterfolie ausgebildet ist, dass adhäsionsseitig auf der Adhäsionsfolie eine abziehbare, weichmacherhemmende Abdeckschicht haftet, die an ihrer der Adhäsionsfolie (13) gegenüberliegenden Außenfläche des Schichtwerkstoffes nicht haftet und dass die Abdeckschicht eine Kunststofffolie ist, gegebenenfalls eine Polypropylen-Kunststofffolie, die auf der einen Seite glänzend und auf der anderen Seite matt ist, wobei die matte Seite die Außenfläche ist.

2. Schichtwerkstoff nach Anspruch 1, **dadurch gekennzeichnet, dass** die als Polyesterfolie ausgebildete Trägerschicht (11) außenseitig bezüglich ihrer Abwischbarkeit oder ihrer Bedruckbarkeit optimiert ist.

3. Schichtwerkstoff nach Anspruch 1 oder 2, **dadurch gekennzeichnet, dass** die Trägerschicht (11) mit einer Schutzschicht (17) versehen ist.

4. Schichtwerkstoff nach einem der Ansprüche 1 bis 3, **dadurch gekennzeichnet, dass** die Trägerschicht (11) auf ihrer der Adhäsionsfolie (13) gegenüberliegenden Oberfläche (17) mit einer Deckschicht (15) kaschiert ist.

5. Schichtwerkstoff nach einem der Ansprüche 1 bis 4, **dadurch gekennzeichnet, dass** die Deckschicht (15) aus einer Polyesterfolie besteht.

6. Schichtwerkstoff nach Anspruch 4, **dadurch gekennzeichnet, dass** die Deckschicht (15) eine Polyesterfolie oder eine Polypropylenfolie ist.

7. Schichtwerkstoff nach einem der Ansprüche 1 bis 6, **dadurch gekennzeichnet, dass** die Trägerschicht (11) und/oder die Deckschicht (15) selbstrückstellend ausgebildet ist bzw. sind.

8. Schichtwerkstoff nach einem der Ansprüche 1 bis 7, **dadurch gekennzeichnet, dass** die Trägerschicht (11) klarsichtig oder eingefärbt und die Deckschicht (15) klarsichtig ist.

9. Schichtwerkstoff nach einem der Ansprüche 1 bis 8, **dadurch gekennzeichnet, dass** die Trägerschicht (11) und die Adhäsionsfolie (13) durch deren Adhäsionswirkung zusammenhalten.

10. Schichtwerkstoff nach einem der Ansprüche 1 bis 9, **dadurch gekennzeichnet, dass** die Trägerschicht (11) bei zweilagiger Ausbildung des Schichtwerkstoffes etwa 100 bis 200 µm und/oder die Adhäsionsfolie (13) etwa 250 µm stark ist.

11. Schichtwerkstoff nach einem der Ansprüche 1 bis 10, **dadurch gekennzeichnet, dass** die Trägerschicht (11) bei drei- oder mehrlagiger Ausbildung des Schichtwerkstoffes etwa 50 µm stark und die Deckschicht (15) etwa 100 bis 200 µm stark ist.

12. Schichtwerkstoff einem nach der Ansprüche 1 bis 11, **dadurch gekennzeichnet, dass** ein die Adhäsionsfolie (13) mit der Trägerschicht verbindender Kleber (14) zumindest weichmacherhemmend ausgebildet ist.

13. Schichtwerkstoff nach Anspruch 12, **dadurch gekennzeichnet, dass** dass der Kleber (14) ein Polyurethankleber ist.

14. Schichtwerkstoff nach Anspruch 12 oder 13, **dadurch gekennzeichnet, dass** der Kleber (16) für die Deckschicht (15) der gleiche Kleber ist, wie der zwischen der Adhäsionsfolie (13) und der Trägerschicht (11).

15. Schichtwerkstoff nach einem der Ansprüche 12 bis 14, **dadurch gekennzeichnet, dass** die Schichten trennbar miteinander verklebt sind.

16. Schichtwerkstoff nach einem der Ansprüche 1 bis 15, **dadurch gekennzeichnet, dass** die Schutzschicht (17) auf der Trägerschicht (11) oder auf der Deckschicht (15) mittels Klebstoff haftet und von diesem auf der Schicht (11, 15) deponierten Klebstoff abziehbar ist.

## Claims

1. Sheet-like laminate material (10), in particular for advertising, presentation and display purposes, having a flexible carrier layer (11) consisting of synthetic material, which on its rear side (12) is provided with an adhesive sheet (13) consisting of synthetic material and containing a plasticiser, **characterised in that** the carrier layer (11) is formed as a polyester sheet which at least inhibits the plasticiser, that on the adhesive side a removable plasticiser-inhibiting covering layer (18) adheres to the adhesive sheet (13), which covering layer is not adhesive on its outer surface of the laminate material (10) opposite the adhesive sheet (13) and that the covering layer is a synthetic material sheet, possibly a polypropylene synthetic material sheet, which sheet is on the one side glossy and on the other side matt, wherein the matt side is the outer side.

2. Laminate material according to claim 1, **characterised in that** the carrier layer (11) formed as a polyester sheet is optimised on the outside with respect to its ability to be wiped clean or to receive pointing.

3. Laminate material according to claim 1 or 2, **characterised in that** the carrier layer (11) is provided with a protective layer (17).

4. Laminate material according to one of the claims 1 to 3, **characterised in that** on its surface (11') opposite the adhesive sheet (13), the carrier layer (11) is covered with a cover layer (15).

5. Laminate material according to one of claims 1 to 4, **characterised in that** the cover layer (15) consists of a polyester sheet.

6. Laminate material according to claim 4, **characterised in that** the cover layer (15) is a polyethylene sheet or a polypropylene sheet.

7. Laminate material according to one of claims 1 to 6, **characterised in that** the carrier layer (11) and/or the cover layer (15) is or are formed to be self restoring.

8. Laminate material according to one of claims 1 to 7, **characterised in that** the carrier layer (11) is transparent or coloured and the cover layer (15) is transparent.

9. Laminate material according to one of claims 1 to 8, **characterised in that** the carrier layer (11) and the adhesive sheet (13) are held together by the adhesive effect thereof.

10. Laminate material according to one of claims 1 to 9, **characterised in that** in the case of a two-layer formation of the laminate material, the carrier layer (11) is about 100 to 200µm in thickness and/or the adhesive sheet (13) is about 250µm in thickness.

11. Laminate material according to one of claims 1 to 10, **characterised in that** in the case of a formation of the laminate material with three or more layers, the carrier layer (11) is about 50µm in thickness and the cover layer (15) is about 100 to 200µm in thickness.

12. Laminate material according to one of claims 1 to 11, **characterised in that** an adhesive (14) bonding the adhesive sheet (13) to the carrier layer is formed at least in a plasticiser-inhibiting manner.

13. Laminate material according to claim 12, **characterised in that** the adhesive (14) is a polyurethane adhesive.

14. Laminate material according to claim 12 or 13, **characterised in that** the adhesive (16) for the cover layer (15) is the same as the adhesive between the adhesive sheet (13) and the carrier layer (11).

15. Laminate material according to one of claims 12 to 14, **characterised in that** the layers are adhered to each other in a separable manner.

16. Laminate material according to one of claims 1 to 15, **characterised in that** the protective layer (17) adheres to the carrier layer (11) or to the cover layer (15) by means of adhesive and can be removed from this adhesive deposited on the layer (11, 15).

## Revendications

1. Matériau stratifié en forme de feuille (10), en particulier pour la publicité et la présentation, comportant une couche de support flexible (11) en matière plastique qui est pourvue, sur sa face arrière (12), d'une feuille adhésive (13) en matière plastique contenant un plastifiant, **caractérisé en ce que** la couche de support (11) est conçue comme une feuille en polyester faisant au moins obstacle au plastifiant, **en ce qu'**une couche de revêtement (18) pelable et faisant obstacle au plastifiant colle à la feuille adhésive (13), côté adhérente, et ne colle pas au niveau de la surface extérieure du matériau stratifié (10) opposée à la feuille adhésive (13), et que la couche de revêtement est une feuille en matière plastique, éventuellement une feuille plastique polypropylène, et que la feuille est brillante sur une face et matte sur l'autre face, la face matte constituant la surface extérieure.

2. Matériau stratifié selon la revendication 1, **caractérisé en ce que** l'imprimabilité de la couche de support (11) conçue comme une feuille en polyester ou son aptitude à être essuyée sont optimisées, côté extérieur.

3. Matériau stratifié selon la revendication 1 ou 2, **caractérisé en ce que** la couche de support (11) est pourvue d'une couche de protection (17).

4. Matériau stratifié selon l'une des revendications 1 à 3, **caractérisé en ce que** la couche de support (11) est doublée, sur sa surface (11') opposée à la feuille adhésive (13), d'une couche de recouvrement (15).

5. Matériau stratifié selon l'une des revendications 1 à 4, **caractérisé en ce que** la couche de recouvrement (15) se compose d'une feuille en polyester.

6. Matériau stratifié selon la revendication 4, **caractérisé en ce que** la couche de recouvrement (15) est une feuille en polyéthylène ou une feuille en polypropylène.

7. Matériau stratifié selon l'une des revendications 1 à 6, **caractérisé en ce que** la couche de support (11) et/ou la couche de recouvrement (15) sont conçues pour reprendre leur position automatiquement.

8. Matériau stratifié selon l'une des revendications 1 à 7, **caractérisé en ce que** la couche de support (11) est transparente ou colorée, et la couche de recouvrement (15) est transparente.

9. Matériau stratifié selon l'une des revendications 1 à 8, **caractérisé en ce que** la couche de support (11) et la feuille adhésive (13) sont réunies grâce à l'action adhésive de celle-ci.

10. Matériau stratifié selon l'une des revendications 1 à 9, **caractérisé en ce que** dans le cas d'un matériau stratifié à deux couches, la couche de support (11) a une épaisseur d'environ 100 à 200 µm et/ou la feuille adhésive (13) a une épaisseur d'environ 250 µm.

11. Matériau stratifié selon l'une des revendications 1 à 10, **caractérisé en ce que** dans le cas d'un matériau stratifié à trois couches ou plus, la couche de support (11) a une épaisseur d'environ 50 µm, et la couche de recouvrement (15) a une épaisseur d'environ 100 à 200 µm.

12. Matériau stratifié selon l'une des revendications 1 à 11, **caractérisé en ce qu'**une colle (14) reliant la feuille adhésive (13) à la couche de support est conçue pour faire au moins obstacle au plastifiant.

13. Matériau stratifié selon la revendication 12, **caractérisé en ce que** la colle (14) est une colle polyuréthanne.

14. Matériau stratifié selon la revendication 12 ou 13, **caractérisé en ce que** la colle (16) prévue pour la couche de recouvrement (15) est la même que la colle prévue entre la feuille adhésive (13) et la couche de support (11).

15. Matériau stratifié selon l'une des revendications 12 à 14, **caractérisé en ce que** les couches sont collées de manière à pouvoir à être séparées.

16. Matériau stratifié selon l'une des revendications 1 à 15, **caractérisé en ce que** la couche de protection (17) adhère à la couche de support (11) ou à la couche de recouvrement (15) grâce à un adhésif et est apte à être détaché de cet adhésif déposé sur la couche (11,15).
